# DEMANDE DE BREVET EUROPEEN

(11) **EP 0 866 533 A1**
(43) Date de publication de la demande: **23.09.1998**
(21) Numéro de dépôt: 98400610.6
(22) Date de dépôt: 16.03.1998
(51) Int. Cl.: H02B 13/045

(54) **Enveloppe isolante en matériau composite en particulier pour disjoncteur de générateur**

(30) Priorité: 17.03.1997 FR 9703182
(71) Demandeur: GEC ALSTHOM T ET D SA, 75116 Paris (FR)
(72) Inventeur: Ardyna, Henri, 69210 Eveux (FR); Durieu, Marc, 01390 Civrieux (FR); Biquez, François, 69530 Brignais (FR)
(74) Mandataire: Gosse, Michel

(57) **Abrégé**

La présente invention concerne une enveloppe tubulaire isolante en matériau composite destinée à contenir un gaz diélectrique sous pression et un appareillage électrique et comportant un collier métallique (2) fixé à au moins une de ses extrémités et pourvu d'un organe (3) destiné à la fixation du collier (2) sur une pièce support (4), un joint d'étanchéité (5) étant intercalé entre cette pièce support (4) et l'enveloppe (1).

Selon l'invention, un insert métallique (6) est fretté et collé à cette extrémité de l'enveloppe (1), le joint d'étanchéité (5) étant intercalé entre cet insert (6) et la pièce support (4).

## Description

La présente invention se rapporte à une enveloppe isolante en matériau composite en particulier pour disjoncteur de générateur.

Elle concerne plus précisément une enveloppe tubulaire isolante en matériau composite destinée à contenir un gaz diélectrique sous pression et un appareillage électrique et comportant un collier métallique fixé à au moins une de ses extrémités et pourvu d'un organe destiné à la fixation du collier sur une pièce support, un joint d'étanchéité étant intercalé entre cette pièce support et l'enveloppe.

Par matériau composite, il est entendu en matière plastique armé d'un tissu ou de filaments, par exemple en résine époxy armée de fibres de verre.

Il est divulgué dans le document de brevet FR-2 735 898 déposé le 20 juin 1995, de fixer le collier sur l'enveloppe isolante par vissage direct de celui-ci sur l'enveloppe et d'interposer un joint d'étanchéité entre le collier et l'enveloppe isolante. Il s'avère cependant qu'un tel assemblage n'assure pas une bonne étanchéité entre le collier et l'enveloppe isolante et ne peut être utilisé que dans le cas où l'appareil électrique contenu par l'enveloppe ne nécessite pas une pression de gaz diélectrique précise.

Selon l'art antérieur, pour obtenir une étanchéité correcte entre le collier et l'enveloppe isolante, ce collier est donc fretté et collé sur l'enveloppe en matériau composite, plus précisément sur la surface frontale d'extrémité de celle-ci et sur une partie de sa surface externe. Cette liaison par frettage et collage est indispensable pour assurer une bonne étanchéité entre le collier et l'enveloppe en matériau composite. Le collier est destiné à être serré sur la pièce support, en général par vissage, avec interposition d'un joint d'étanchéité entre le collier et la pièce support. Cette liaison par frettage-collage assure donc deux fonctions: la tenue mécanique et l'étanchéité.

Une telle enveloppe isolante peut être soumise à des températures élevées. C'est en particulier le cas lorsque l'appareil électrique contenu par celle-ci est un disjoncteur de générateur. En effet, contrairement aux disjoncteurs de ligne haute tension, les disjoncteurs de générateur disposés dans les centrales de production d'électricité sont traversés en permanence par un plein courant nominal. Leur température permanente d'utilisation est de l'ordre de 100°C.

Cette température élevée soumet la liaison par frettage-collage à des contraintes trop élevées. Il en résulte des problèmes de fluage de la colle et une mauvaise étanchéité.

L'invention résout ce problème en séparant les deux fonctions que sont la tenue mécanique et l'étanchéité.

Pour ce faire, conformément à l'invention, un insert métallique est fretté et collé à cette extrémité de l'enveloppe, le joint d'étanchéité étant intercalé entre cet insert et la pièce support.

Le collier assure donc la fonction de tenue mécanique et l'insert la fonction d'étanchéité.

Outre la fiabilité de l'étanchéité, l'insert ne subissant que très peu de contrainte mécanique, un avantage de l'invention est qu'elle permet une mise au point plus facile, une fonction correspondant à une zone géométrique bien définie sans interférence entre ces deux zones.

Il est également possible d'utiliser pour le collage de l'insert une colle de caractéristiques mécaniques inférieures à celle utilisée selon l'art antérieur.

Selon le mode de réalisation préféré,
- ce collier est constitué d'une première partie tubulaire vissée et collée sur la surface externe de l'enveloppe et d'une seconde partie tubulaire de prolongement de diamètre interne supérieur et débordant à l'extrémité de l'enveloppe, une fois le collier mis en place,
- l'insert métallique comporte une partie annulaire fixée à la face frontale d'extrémité de l'enveloppe et une partie tubulaire fixée sur la surface interne de l'enveloppe.

De préférence, le collier et l'insert sont en aluminium.

L'insert peut également être en inox amagnétique.

La liaison entre l'insert et l'enveloppe isolante est particulièrement peu sollicitée mécaniquement, si la hauteur de l'insert est inférieure ou égale à 0,8 fois la hauteur du collier.

L'invention est décrite ci-après plus en détail à l'aide d'une figure ne représentant qu'un mode de réalisation préféré de l'invention.

Cette figure est une vue partielle en coupe longitudinale d'une enveloppe isolante conforme à l'invention.

L'enveloppe tubulaire isolante en matériau composite 1 destinée à contenir un gaz diélectrique sous pression et un appareillage électrique, et tout particulièrement un disjoncteur de générateur, comporte un collier métallique 2, de préférence en aluminium, fixé à au moins une de ses extrémités, et en pratique souvent à chacune de ses extrémités. Ce collier 2 est pourvu d'un organe 3 destiné à la fixation du collier 2 sur une pièce support 4, cet organe étant en général un alésage destiné à recevoir un agencement de vissage venant serrer le collier 2 contre la pièce support 4. Pour assurer l'étanchéité entre l'enveloppe 1 et cette pièce support 4, un joint d'étanchéité 5 est intercalé, par l'intermédaire d'une gorge pratiquée dans la pièce support 4, entre cette pièce support 4 et l'enveloppe 1.

Selon l'invention, un insert métallique 6, de préférence en aluminium ou en inox amagnétique, est fretté et collé à cette extrémité de l'enveloppe 1, le joint d'étanchéité 5 étant intercalé entre cet insert 6 et la pièce support 4.

Plus précisément, le collier 2 est constitué d'une première partie tubulaire 2A vissée et collée sur la surface externe de l'enveloppe 1 et d'une seconde partie tubulaire 2B de prolongement de diamètre interne supérieur et débordant à l'extrémité de l'enveloppe 1, une fois le collier mis en place. La première partie 2A et le filetage correspondant sont dimensionnés de telle sorte qu'un jeu j existe entre la face frontale d'extrémité de l'enveloppe 1 et l'extrémité de cette première partie 2A proche de cette face.

Ce jeu permet un positionnement correct de l'insert 6 contre la face frontale d'extrémité de l'enveloppe 1, sans butée contre le collier 2. Cet insert 6 comporte une partie annulaire 6A fixée, par frettage-collage, à la face frontale d'extrémité de l'enveloppe 1 et une partie tubulaire 6B fixée, par frettage-collage, sur la surface interne de l'enveloppe 1.

Des calculs par éléments finis ont montré que la liaison de l'insert 6 avec l'enveloppe était particulièrement peu sollicitée mécaniquement, si la hauteur h de l'insert 6 est inférieure ou égale à 0,8 fois la hauteur H du collier 2.

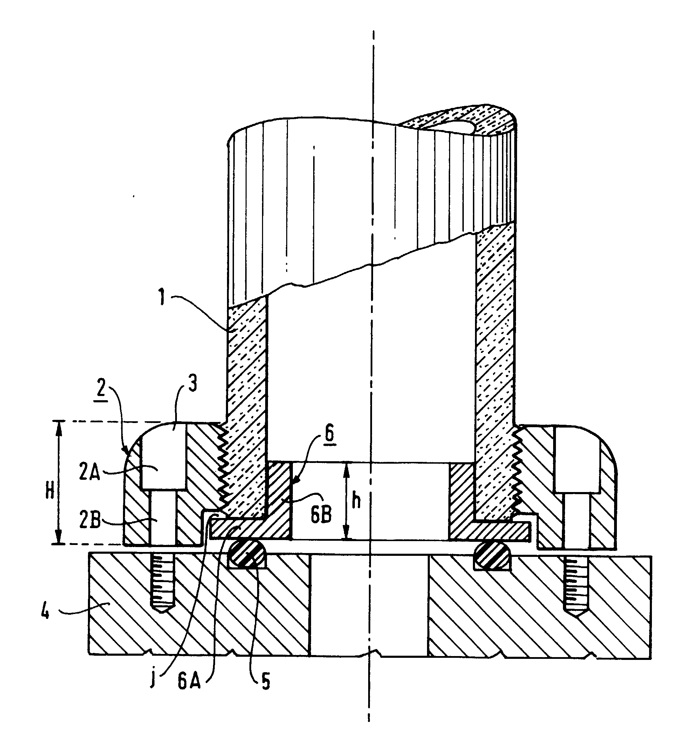

## Revendications

1. Enveloppe tubulaire isolante en matériau composite destinée à contenir un gaz diélectrique sous pression et un appareillage électrique et comportant un collier métallique (2) fixé à au moins une de ses extrémités et pourvu d'un organe (3) destiné à la fixation du collier (2) sur une pièce support (4), un joint d'étanchéité (5) étant intercalé entre cette pièce support (4) et l'enveloppe (1), caractérisée en ce qu'un insert métallique (6) est fretté et collé à cette extrémité de l'enveloppe (1), le joint d'étanchéité (5) étant intercalé entre cet insert (6) et la pièce support (4).

2. Enveloppe selon la revendication 1, caractérisée en ce que
- ce collier (2) est constitué d'une première partie tubulaire (2A) vissée et collée sur la surface externe de l'enveloppe (1) et d'une seconde partie tubulaire (2B) de prolongement de diamètre interne supérieur et débordant à l'extrémité de l'enveloppe (1), une fois le collier (2) mis en place,
- l'insert métallique (6) comporte une partie annulaire (6A) fixée à la face frontale d'extrémité de l'enveloppe (1) et une partie tubulaire (6B) fixée sur la surface interne de l'enveloppe (1).

3. Enveloppe selon l'une des revendications précédentes, caractérisée en ce que le collier (2) est en aluminium.

4. Enveloppe selon l'une des revendications précédentes, caractérisée en ce que l'insert (6) est en aluminium.

5. Enveloppe selon l'une des revendications 1 à 3, caractérisée en ce que l'insert (6) est en inox amagnétique.

6. Enveloppe selon l'une des revendications précédentes, caractérisée en ce que la hauteur (h) de l'insert (6) est inférieure ou égale à 0,8 fois la hauteur (H) du collier (2).

7. Disjoncteur de générateur équipé d'une enveloppe selon l'une des revendications précédentes.
